# EUROPEAN PATENT SPECIFICATION

(11) **EP 3 814 745 B1**
(45) Date of publication and mention of the grant of the patent: **11.11.2026**
(21) Application number: 19796996.7
(22) Date of filing: 06.05.2019
(51) Int. Cl.: G01N 15/06, G01N 15/02, G01N 1/10, G01N 1/22, G01N 1/24, G01N 1/02

(54) **PARTICULATE SAMPLING DEVICE AND ANALYSIS**
PROBENAHMEVORRICHTUNG FÜR TEILCHEN UND ANALYSE
DISPOSITIF D'ÉCHANTILLONNAGE DE MATIÈRE PARTICULAIRE ET ANALYSE

(30) Priority: 04.05.2018 AU 2018901525
(43) Date of publication of application: 05.05.2021
(73) Proprietor: BioScout Pty Ltd, New Lambton Heights, NSW 2305 (AU)
(72) Inventor: COLLINS, Lewis Alexander, St Dulwich Hill, New South Wales 2203 (AU); BRINDLE, Henry, Roseville, New South Wales 2069 (AU); BERHANE, Saron, Matraville, New South Wales 2036 (AU)
(74) Representative: Marks & Clerk LLP
(86) International application number: PCT/AU2019/050415
(87) International publication number: WO 2019/210375

(56) References cited:
- WO-A1-2017/064376
- US-A1- 2004 227 938
- US-A1- 2004 227 938
- US-A1- 2004 232 052
- US-A1- 2004 232 052
- US-A1- 2009 027 674
- US-A1- 2016 290 912
- US-A1- 2016 290 912
- US-A1- 2018 087 919
- US-A1- 2018 087 919

## Description

### Technical Field

This disclosure is directed to a sampling device for the collection of particulates from a fluid, and a method for the collection of particulates using a sampling device. This disclosure is also directed to a method for particulate detection. This disclosure also relates to analysis of particulates.

### Background Art

Airborne diseases are a threat to society. There has been some progress towards treating these diseases and reducing their impact.

Known devices for monitoring, tracking and detecting airborne diseases are static particle samplers such as the Hirst or Burkard Spore Traps. They provide a basic mechanical sampling solution and may be required to be manually transported to different locations to provide an accurate set of sample data.

The Burkard Spore Trap samples air borne particles such as pollen and other spores. It includes a vacuum pump that operates by suctioning air through an orifice located in a housing. Contained inside the housing is a trapping surface located on a greased microscope slide. The air borne particles are drawn into the housing and deposited on the trapping surface of the slide by impaction through the airflow.

The Trap is located at a site according to the type of particles under investigation. If more comprehensive investigation is underway, then more than one Trap may be located at multiple sites, or the Trap may be manually moved between sites. The windspeed and particle size impact efficiency of the Spore Trap. Also, the slide requires constant checking within a short period of time to prevent the overloading of spores on the slide, and is easily contaminated. Trapped particles are viewed each day by microscope.

Great care, planning and human labour is necessary at all stages when using the Burkard Spore Trap to obtain an accurate record of air borne particles. Such known samplers may rarely achieve the ideal sampling and flow conditions and may thereby be incapable of providing the highly accurate and meaningful data necessary.

Furthermore, analysis of the collected air borne particles has traditionally limited the monitoring of diseases, requiring large amounts of human labour, expensive materials and taking lengthy periods of time in order to process and analyse collected data.

It is to be understood that, if any prior art is referred to herein, such reference does not constitute an admission that the prior art forms a part of the common general knowledge in the art, in Australia or any other country.

US 2016/290912 A1, US 2018/087919 A1, US 2004/227938 A1, US 2004/232052 A1 or US 2009/027674 A1 disclose a sampling method and system comprising a collecting media (i.e. a tape), a supply reel and uptake reel, wherein the speed of the collecting media is sensed and controlled directly by the reel.

### Summary

The invention is disclosed in the independent claims 1 and 6.

Further embodiments are disclosed in the dependent claims.

### Brief Description of the Drawings

Embodiments will now be described by way of example only, with reference to the accompanying drawings in which
**Fig. 1** is a side view of an embodiment of a sampling device;
**Fig. 2** is a cross-sectional top view of the sampling device of Fig. 1 along the line A-A;
**Fig. 3** is a close-up cross-sectional top view of an embodiment of a moveable collection arrangement of the sampling device of Fig. 2;
**Fig. 4** is a cross-sectional bottom view of an embodiment of the sampling device along the line B-B of Fig. 1;
**Fig. 5** is an isometric perspective view of the sampling device of Fig. 1
**Fig. 6A** is a front view of an embodiment of a mobile embodiment of the sampling device;
**Fig. 6B** is a plan view of the mobile embodiment of the sampling device of Fig. 6A;
**Fig. 6C** is a plan view of the mobile embodiment of the sampling device of Fig. 6A and 6B;
**Fig. 7** is an isometric perspective view of an embodiment of an inlet and outlet control of the sampling device of Fig. 1;
**Fig. 8A** is flow diagram of a first embodiment of a system for the collection and analysis of particulates;
**Fig. 8B** is flow diagram of a second embodiment of a system for the collection and analysis of particulates;
**Fig. 9A** is a flow diagram of an embodiment a method of inlet and outlet control using the disclosed sampling device;
**Fig. 9B** is a flow diagram of an embodiment of a method of control of the moveable collection arrangement using the disclosed sampling device;
**Fig. 9C** is a flow diagram of an embodiment of a flow rate control scheme using the disclosed sampling device;
**Fig. 10** is a flow diagram of an embodiment of a method of collecting particulates using the disclosed sampling device;
**Fig. 11** is a cross-sectional view of an embodiment of an analysis system;
**Fig. 12** is a side cross-sectional view of the analysis system of Fig. 11;
**Fig. 13** is an embodiment of a real-time sampling and analysis system; and
**Fig. 14** is a block diagram of an embodiment of an embodiment of a real time monitor.

### Detailed Description

In the following detailed description, reference is made to accompanying drawings which form a part of the detailed description. The illustrative embodiments described in the detailed description, depicted in the drawings and defined in the claims, are not intended to be limiting. It will be readily understood that the aspects of the present disclosure, as generally described herein and illustrated in the drawings can be arranged, substituted, combined, separated and designed in a wide variety of different configurations, all of which are contemplated in this disclosure.

The sampling device 100, analysis system 400, and sampling and analysis system 500 disclosed herein relate to the collection and identification of a range of air borne particulates, such as pathogens. Such devices and systems may be beneficial in identifying hazardous particulates. This may help in preventing the spread of diseases carried by air borne particulates.

The sampling device 100 disclosed includes a number of aspects which may assist in improving the efficiency collection and identification of air borne particles. Some of these different aspects of the sampling device that will be discussed in more detail below are as follows:
- control of collection arrangement;
- control of fluid intake;
- control of inlet and outlet orientation; and
- real-time analysis.

Further, data collected by the sampling device can be stored by the sampling device. For example, specific particulates can be correlated with the collection of atmospheric data (such as wind, temperature and humidity) and geospatial information (such as time and location). This data can then be stored on a memory device, transmitted by a telecommunication means 252 to a server off-site or transmitted to the cloud. The memory device may be removable.

Although, this is not an exhaustive list of aspects of the sampling device 100, these aspects may contribute to providing high-precision analysis which may contribute to infestation maps and threat prediction software of diseased air borne particulates. The atmospheric and geospatial data collected by the sampling device may also assist in developing the infestation maps and threat prediction software. Further techniques employed to develop the infestation maps and threat protection software will also be discussed in more detail below.

The air borne particulates to be collected may include many different types and forms. For example, the device may collect aerobiological particulates which may include particles, pathogens (e.g., bacterial, viral, fungal etc.), allergens, spores, pollutants and pollens etc. The air borne particulates may be any size, and for example may range in size from 1um to 100 um in diameter.

### Sampling Device

The sampling device 100 (also known as a sampler) can be integrated into numerous mobile or static platforms. Once configured, the sampling device 100 is then able to autonomously collect air borne particles. In addition to collecting a sample of airborne particulates, the sampling device 100 can also collect atmospheric data 80 (such as wind, temperature and humidity) and geospatial information 82 (such as time and location).

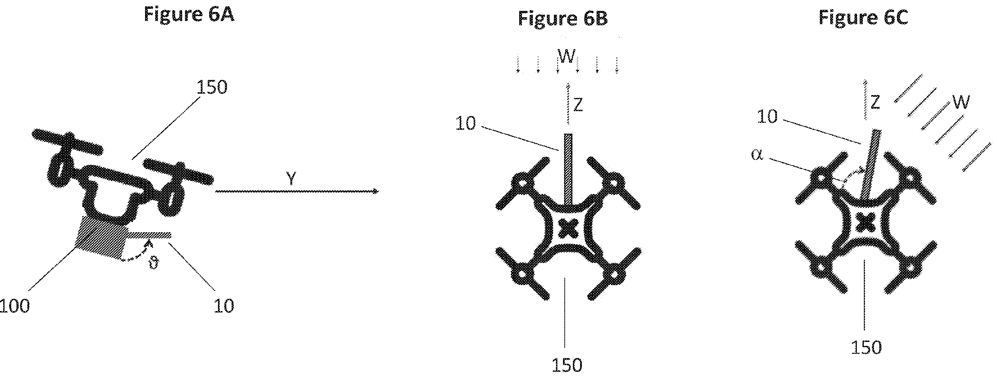

Various mobile devices can be used, such as an unmanned ground vehicle or automobile, or an unmanned aerial vehicle (UAV) sampling device, or any suitable device that is able to operate with various degrees of autonomy: either under remote control by a human operator, autonomously by onboard computer, autonomously through a predetermined flight plan, or autonomously through offboard computers. For example, in some embodiments, the sampler 100 can be integrated with an aerial vehicle such as a multirotor drone 150 (Figures 6A, 6B, & 6C). The integrated mobility device (e.g. drone 150) can be programmable to accept a pre-determined route which is then either autonomously executed or manually over-written. The pre-determined route can be a continuous movement, or can include one or more waypoint stops.

A static sampling device may also operate autonomously. For example, in some embodiments the sampling device 100 can be mounted on a pole via a marine-grade swivel bearing. The height of the system can be adjustable so as to correspond to crop canopy height (typically 1 to 5 meters above the ground) . A wind vane can be used in some embodiments to assist in directing an intake body (e.g., an intake nozzle) into the wind. This may improve collection efficiency.

The sampling device 100 can be sealed in an enclosure with an ingress protection rating of IP66 or higher. This may improve longevity of the sampling device 100 and may reduce the likelihood of the interior of the device being damaged by contaminants such as water and dust.

The sampling device 100 can be configurable to collect particulates ranging from 1um to 40um in diameter. This range may advantageously allow for both bacterial and fungal particulate detection whilst avoiding the collection of spurious material such as soil particles and other debris. The device can be modified in some embodiments to collect particulates of other sizes, such as pollens which may be as big as 100um.

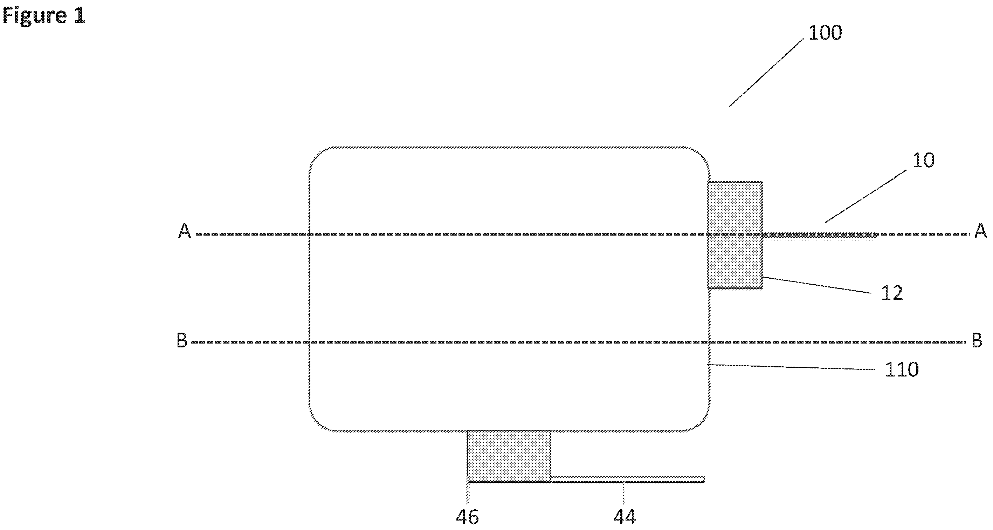

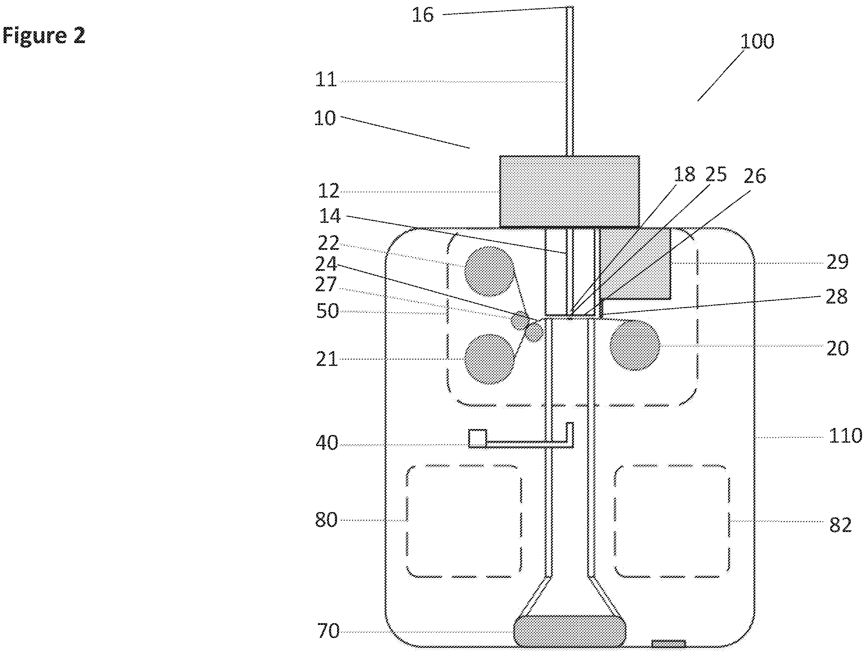

In the embodiments shown in Figures 1 and 2, the collected particulates, once captured on a surface portion 26, can be stored on a tape cassette-like system 50. The cassette-like system 50 can be a removable device that is able to store the collected particles for further analysis. Once a sample has been collected, the cassette-like system 50 can be moved between the sampler device 100 and the analysis system 400 for post-processing. In some embodiments, a collection reel 21 can be removable (like a cassette) for storage or transport to alternative systems for further analysis.

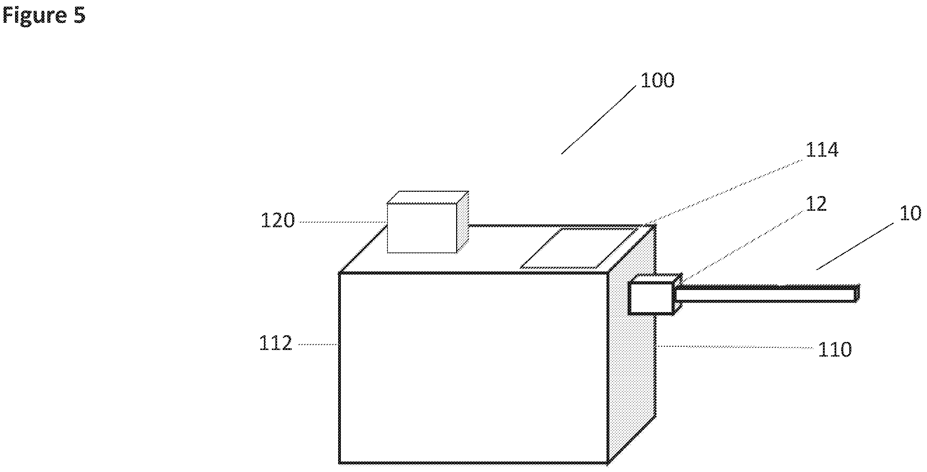

In addition to removing collected samples, it may be possible to remove and replace other internally stored devices such as components of the electronics module 84, including data storage devices and communication devices. For example, when a cassette-like system 50 is used to collect and store the samples (Figures 1, 2 & 5) the cassette-like system 50 may be removed as a singular unit through a hatch 114 in the outer casing 110 of the sampler 100. Alternatively, portions of the outer casing 110, such as the back panel 112, may be removed to access the removable components from within the sampler 100.

The mobile sampling device 100 can exhibit an extended battery life, whilst also incorporating the ability to quickly replace exhausted batteries 90. In some embodiments, the sampling device 100 can be charged by a solar panel attached to either the device or the system. This can extend the longevity of the sampling collection and analysis period when either stationary or mobile.

The sampling device 100 can incorporate a number of collection control mechanisms, each of which may optimise the collection efficiencies of the device. These mechanisms include at least one of controlling the motion of the collection arrangement, controlling the rate or volume of the fluid intake, or controlling the inlet and outlet orientation. These mechanisms will be discussed in detail below.

### Control of Collection Arrangement

The sampling device 100 includes a collection arrangement including a surface portion 26 for collecting the air borne particles (e.g., particulates and/or pathogens). In order to deposit the particulates on the surface portion 26, the device 100 generally includes an intake body 10 having an inlet 16 for receiving fluid containing particulates therethrough into the sampling device 100. The intake body also includes an outlet 18 formed at an end of the intake body 10 that faces the interior of the sampling device 100, and more specifically, the surface portion 26. The fluid flows into the sampling device 100 via the outlet 18. In alternative embodiments, the inlet and outlet may overlay one another to form opposing sides of the same aperture.

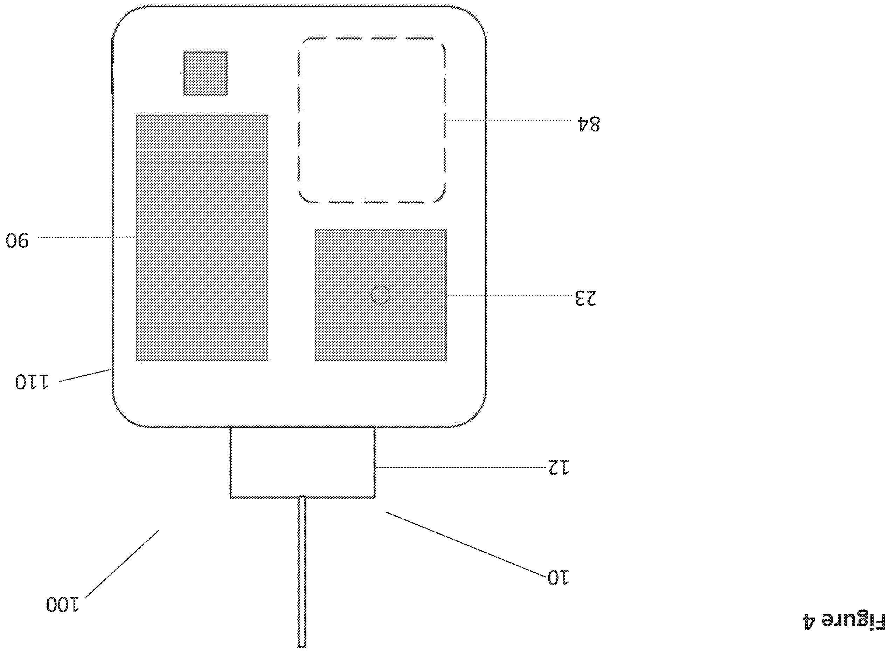

In the embodiment illustrated in Figures 1 to 5, the intake body 10 is in the form a nozzle system. The nozzle system generally includes the inlet 16, an inlet body 11, a nozzle control module 12, an outlet body 14 and an outlet 18.

The sampling device 100 also generally includes the surface portions 26 on which the particulates are collected for analysis. The surface portions may in some embodiments be a continuous length of sampling tape, whilst in other embodiments the surface portions may be individual sampling slides. In the illustrated embodiment, the surface portions 26 are contiguous on a common surface in the form of a continuous length of sampling tape that includes an adhesive for receiving and retaining the particulates on the surface portions 26. In alternative embodiments, silicone, grease or petroleum jelly can be used to coat the surface portions whereby they may act as an adhesive medium for retaining pathogens or particulates captured on the surface portions. In an alternative embodiment, not shown, the collection arrangement may include discrete slides each including a surface portion that may be moved through the collection position.

In the embodiment illustrated in Figures 1 to 3, the collection arrangement is positioned such that the surface portion locates in a collection position 25 adjacent the outlet 18 for receiving the particulates. Thus, particulates contained in the fluid exiting the outlet 18 can impact the surface portion in the collection position 25. The surface portion 26 can be positioned and angled such that the surface portion 26 is substantially perpendicular to the flow of fluid being emitted from the outlet 18 (i.e. perpendicular to the plane of the sampling tape or slides). This may advantageously improve the accuracy of the sampling by evenly deflecting the substantially laminar airstream as it passes the surface portion 26 whereby particulates contained in the fluid that are above a threshold diameter can be propelled across the airstream lines and can be deposited on the surface portion 26. In alternative embodiments, not shown, the surface portion of the collection arrangement can be positioned and angled at an angle between 0 and 90 degrees relative to the fluid flow being emitted from the body.

The surface portion 26 can be configured to move relative to the outlet 18 of the intake body 10 such that the surface portion 26 that is in the collection position 25 varies in response to movement of the collection arrangement. The movement of the collection arrangement can be constant and continuous or at discrete intervals. The surface portions 26 can be controlled such that it maintains a constant velocity as it passes the collection position 25. This may help to inhibit overloading of particulates at a particular surface portion 26. Controlling the movement and velocity of the surface portions 26 may help to improve the analysis of the particulates captured, as they can be correlated with the specific time, location, wind speed, wind direction, or any other data that was recorded during collection.

In embodiments where the surface portions 26 are continuous on a common surface such as a tape, such as is illustrated in Figures 1 to 3, the sampling device 100 can also include a cassette-like supply reel 20 and a collection reel 21 system. The tape providing the common surface of the surface portions 26 can be transferred from being wound around the supply reel 20 to being wound around the collection reel 21. Intermediate the supply 20 and collection 21 reels, the surface portion 26 tape is passed by the collection position 25.

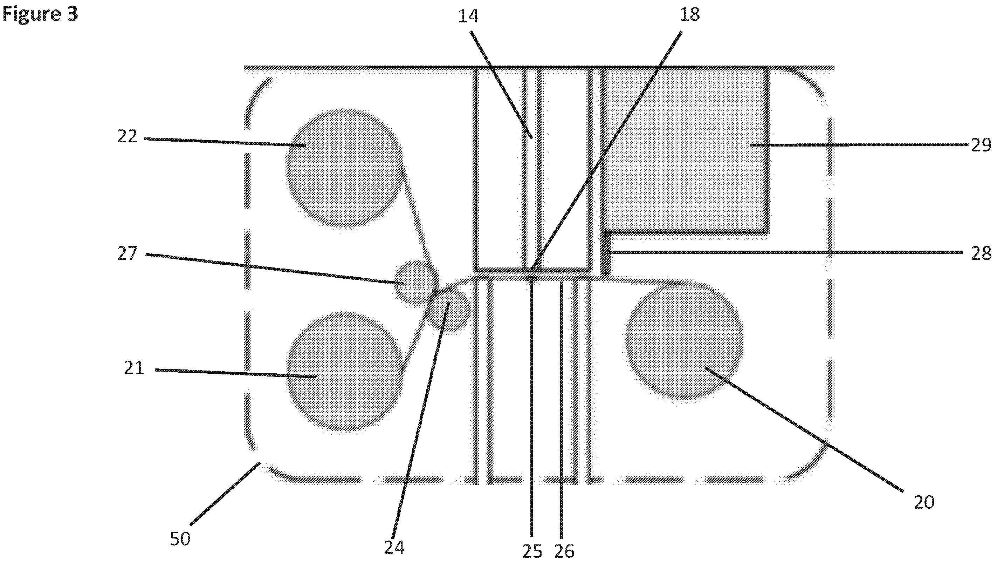

In some embodiments (see Figures 2 and 3), a fine film of biologically supportive substrate (such as agar) stored in a Biological Substrate Reservoir 29 can be secreted through a dispenser 28 onto the surface portion 26 before it reaches the collection position 25. This may advantageously assist particulates to retain and/or survive the sampling process such that further analysis can be undertaken.

A cover is also included to assist in retaining the particulates on the surface portions 26. The cover is in the form of a second reel of sampling tape can be wound around a covering reel 22, the covering reel sampling tape also including an adhesive. The covering reel 22 is positioned such that the second reel of adhesive-based sampling tape can be transferred from the covering reel 22 and applied to the particulate containing surface portion 26 such that the particulates collected on the surface portion 26 are sealed between the two layers of tape prior to being wound around the collection reel 21. The two layers of tape can be retained, and in some embodiments sealed, together by passing the collection tape and covering tape between rollers 27 located proximal to one another whereby the two tapes are pressed together and adhesively sealed to one-another.

The transfer of the surface portion 26 between the supply 20 and collection 21 reels can be facilitated by a drive arrangement. The drive arrangement generally includes a motor 23. The device also includes a sensor (not visible in Figures) to assist in determining the speed of the surface portions which may inform the operation of the drive arrangement. In some embodiments, the motor 23 provides drive that engages and rotates the collection reel 21 such that it pulls and unwinds the surface portions 26 from a free spinning supply reel 20. In some embodiments, the motor 23 or a plurality of motors can provide drive that engages both the supply 20 and collection 21 reels such that they are each rotatably driven whilst maintaining tension in the surface portions 26. In embodiments where a covering reel 22 is included, the covering reel 22 may be rotated by engagement with the motor, or pulled and unwound by the rotation of the collection reel 21.

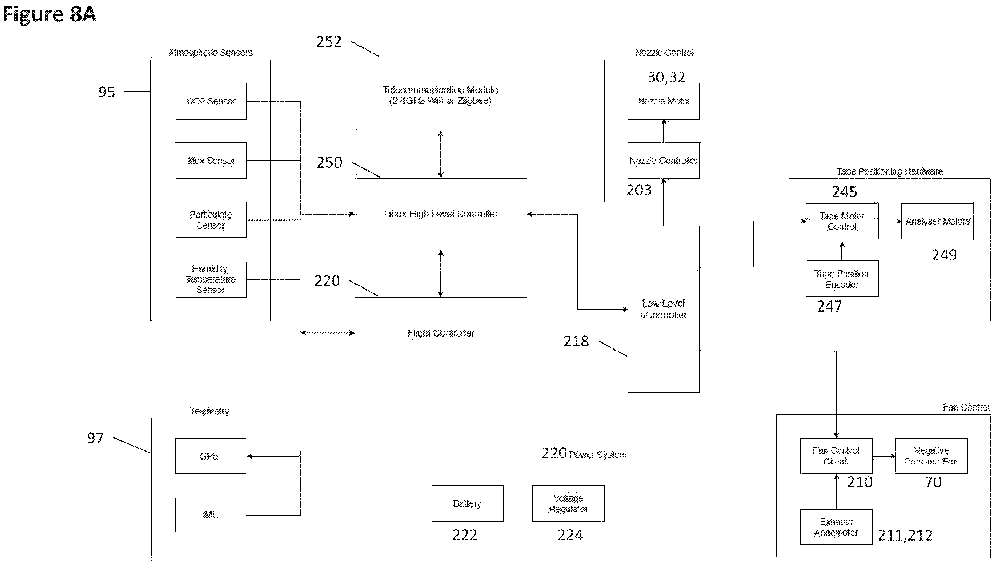

In embodiments where the surface portions 26 are provided by a continuous tape, as the tape moves (e.g. by the reel rotating), a different surface portion is positioned to be the surface portion 26 in the collection position. The movement of the tape is controlled by a tape motor control 245. The tape motor control 245 receives input data from a tape position encoder 247 (see Figure 8A) which tracks the processed portion of the tape surface which was positioned as the surface portion 26. Thus the tape position encoder 247 also tracks the next portion of the tape surface to be positioned as the fresh surface portion 26. The tape position encoder 247 tracks, i.e. encodes or labels the position of the current surface portion 26 in relation to the full length of the tape. The tape position encoder 247 may "track" the position of the current surface portion in another manner, e.g. by tracking the angle by which the reel has rotated, or by tracking the number of angular "steps" which has been taken, to move a particular tape portion in position to be the current surface portion 26.

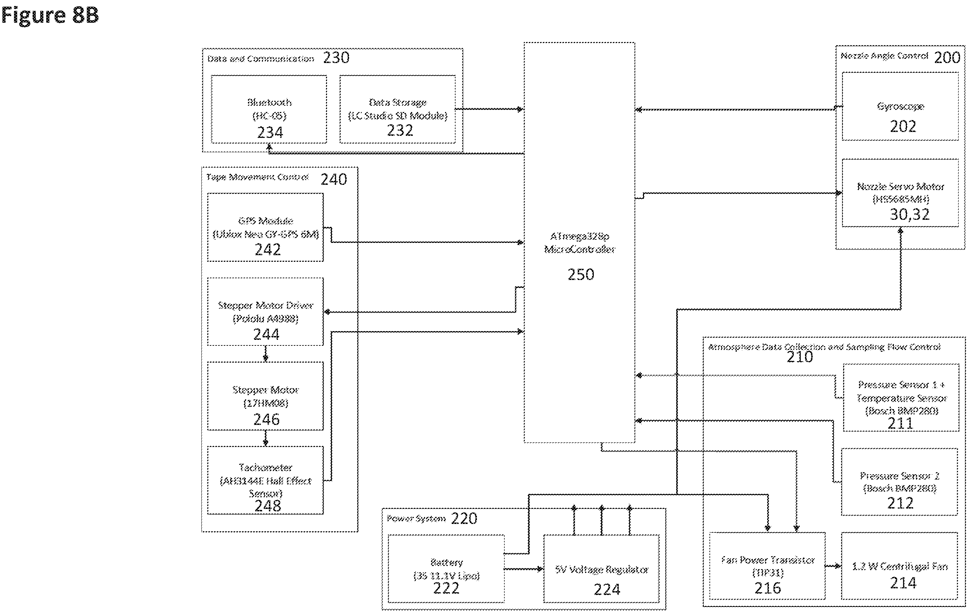

The tape motor control 245 is adapted to, on the basis of the input data from the tape position encoder 247, drive the analyser motor(s) 249 (see Figure 8A). In some embodiments, the movement of the tape may be driven by an arrangement comprising a stepper motor driver 244 and a stepper motor 246 (see Figure 8B).

In an alternative embodiment, not shown, the drive arrangement may alternatively comprise a DC brushless motor with a rotary encoder attached to the capstan spool which may replace the idler pully which provides for smoother linear motion of the tape. In this embodiment the collection reel can be motorized by the stepper motor arrangement.

The tape motor control 245 controls the speed at which the tape moves. To facilitate this control, a sensor 248/249 can measure the speed of the surface portion 26 at which it passes the collection position 25. Knowing the speed of movement of the surface portion 26 at the collection position 25 may be advantageous, as it may assist with calculating the concentration of particulates and correlating the collected particulates on the surface portions with a time and/or location. The sensor 248/249 (or rotary encoder) can also be used to measure and record the relative position of the surface portions 26 during collection of particulates.

In the illustrated embodiment (Figures 1 to 3), the sensor includes a rotary encoder which measures the rotational speed of an idler pulley 24 which is rotated by the surface portions 26 in the form of tape when it moves between the supply 20 and collection 21 reels. The rotary encoder can, in some embodiments, consist of an absolute magnetic angle position sensor that measures the rotation of a two-pole magnetic cylinder on the axis perpendicular to the rotation. The angular velocity measurements of the rotary encoder can then be translated into linear speed by the controller 250.

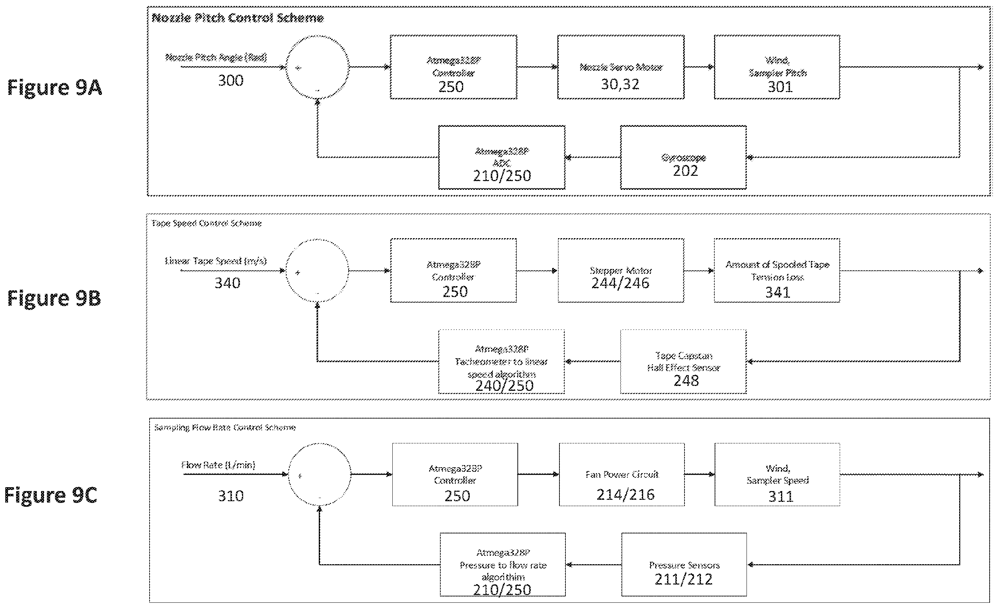

In use, a feedback loop such as the one illustrated in Figure 9B can be used to control the speed of movement of the collection arrangement. In the depicted example, a predetermined collection speed 340 is input into the controller 250. The controller 250 then controls the motor 244, 246. The motor 244, 246 drives the surface portions 26 to move. This movement potentially causes the tape to momentarily lose some tension (as represented by reference 341 in Figure 9B). The speed of the movement of the surface portions 26 (e.g., tape) is adapted to be measured by a sensor 248 (e.g. a tacheometer/hall effect sensor). The data from the sensor 248 is fed back to the controller 250 (or a processing circuit, such as a differential amplifier, which feeds to the controller 250) in a negative feedback control loop. The controller 250 utilises the feedback from the sensor 248 to adjust the control signal output to the motor 244, 246 accordingly, such that even as the radius of the surface portion 26 tape wound around the collection reel 21 varies (i.e. increases due to a lessening of spool tension) during the continuous sampling, the motion of the surface portion 26 is maintained at a constant speed.

### Fluid Flow Rate Control

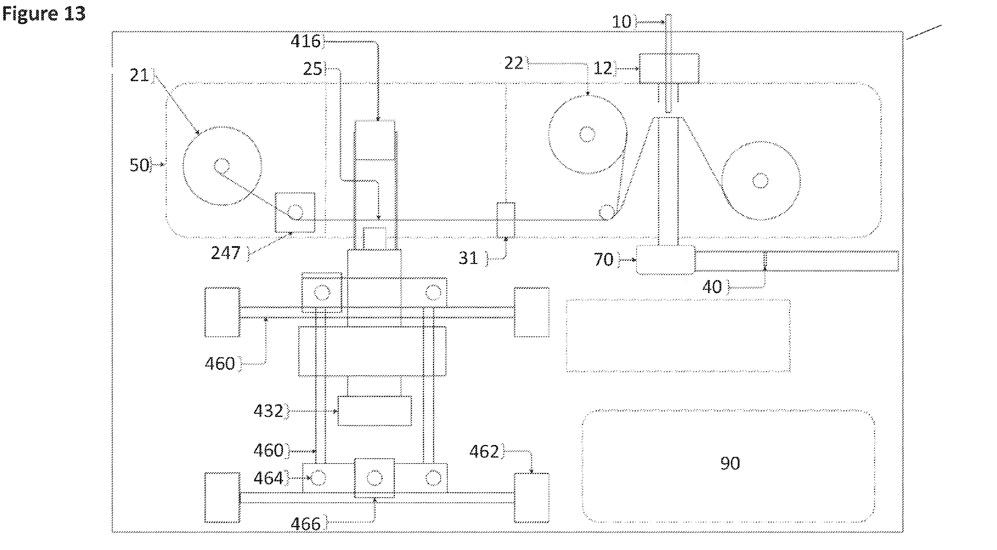

The sampling device 100 may also include a fluid flow control system for controlling the flow rate of the fluid through the sampler at a predetermined flow rate (as shown in Figures 2, 5, 8-10, 13-14). As the fluid and the particulates contained in the fluid exit the outlet 18, the fluid flow may be substantially laminar and moving at a uniform velocity. The streamlines of fluid exiting the outlet 18 can be deflected around the surface portion 26 at the collection position 25 whereby a centripetal force acts on the particulates contained in the fluid. As a result of the centripetal force, particulates above the threshold aerodynamic diameter can be propelled across the streamlines whereby they can be deposited onto the surface portion 26. Particulates below the threshold aerodynamic diameter can continue flowing with the streamlines past the surface portion.

The Stokes Number is defined by the equation: $St = \frac{ρ ∗ {dp}^{2} ∗ C ∗ V}{9 ∗ μ ∗ L ∗ {W}^{2}}$

With the aid of this equation the relationship between the following parameters can be determined:
- the aerodynamic diameter of a particulate;
- the physical dimensions of the outlet 18;
- the velocity of the fluid exiting the outlet 18; and
- the viscosity of the fluid exiting the outlet 18.

Thus it can be seen that by controlling the fluid flow to a particular velocity, the Stokes Number equation can be rearranged to dictate a particular threshold aerodynamic diameter for the sampling device 100.

In some embodiments, the sampling flow rate is predetermined. In some further embodiments, the predetermined flow rate can correspond to a desired fluid velocity at the collection position 25 of the surface portion 26 such that a particular diameter of particulate may be collected.

In some embodiments, the sampling flow rate is maintained at a constant flow rate of fluid. This may advantageously negate the effects of relative flow rate of the fluid into the intake body 10 and sampling device 100 (e.g., wind speed). Maintaining a constant flow rate of fluid at the collection position may also advantageously improve the accuracy of any correlations made between the volume of samples collected and any time or location data gathered.

The fluid flow control system generally includes a means of creating the suction force necessary for fluid sampling. In the embodiment shown in Figures 1-5, a centrifugal exhaust fan 70 is used to generate a vacuum behind the collection position 25 of the surface portion 26 such that fluid containing particulates can be drawn through the sampling device at a controlled flow rate. This may also advantageously reduce turbulence in the collected fluid. The suction can modulate the fluid flow within the sampler 100 for the desired sampling flow rate.

To control the means of creating the suction force (e.g., exhaust fan 70) and thereby adjustably control the relative rate of fluid flow past the surface portion 26, the disclosed sampling device 100 can further comprise at least one sensor 40 that measures the fluid speed. The sensor 40 can be located such that it measures the rate of fluid flow proximal to the portion of the surface portion in the collection position. In some embodiments (such as in Figure 2), the at least one sensor 40 is located such that fluid reaches the sensor 40 after passing the surface portion 26. This may advantageously minimise disruption of the fluid flow.

A control circuit, such as a fan control circuit 210, controls the means of creating the suction force. In some embodiments, a low level system controller 218 (e.g. see the embodiment shown in Figure 8A) denotes the intervening control layer between the high level system controller 250 and the various controllers for the sampler 100, including the fan control circuit 210. The control paradigm (involving controller 250, 210, 218) utilises, in linear feedback control such as a negative feedback loop (see Figs 8A, 8B and 9C), input data from one or more pressure sensors 211, 212 (e. g. anemometer, pitot tubes etc), to control the fan circuit 214, 216 on the basis of the negative pressure generated by the fan. As shown in Figure 9C, a computation module, which implements a pressure to flow rate conversion algorithm, converts the data from the one or more pressure sensors 211, 212 into a flow rate data. This flow rate data is then fed back to the controller(s) 250, 218 in the negative feedback. The computation module can reside in the high level system controller 250, the low level system controller 218 (if provided), or the fan control circuit 210. Thus, the feedback maintains or aims to maintain a constant flow rate as generated by the fan. For example, the sensor 40 can measure the pressure differential inside the sampling device 100, enabling the calculation of the fluid velocity based on Bernoulli's equation. In the embodiment illustrated in Figures 1 and 2, two pitot-static tubes 40, 44 are used to measure the pressure differential between the stagnation pressure of the fluid flow within the sampling device 100 proximal to the surface portion (as measured by one of the pitot-static tubes 40), and the static pressure (as measured by the other pitot-static tube 44) external to the sampling device 100. The pitot-static tube for measuring static pressure 44 external to the sampling device can in some embodiments be rotated to adjust for pitch and yaw such that the fluid flow is laminar in the pitot-static tube. This may advantageously improve accuracy of the pressure readings. In the illustrated embodiment, the pitot-static tube 44 for measuring static pressure is attached to a servo motor 46 that adjust for pitch and yaw based on a gyroscope sensor (not shown).

In some alternative embodiments the pressure differential may be calculated using hot-wire anemometers or ultrasonic anemometers. Using the measured pressure differential, the velocity of the fluid and hence the flow rate can be calculated at the outlet 18.

Figures 8B and 9C illustrate an embodiment of the flow rate control scheme. In the illustrated embodiment, the flow rate 310 can be predetermined and input to a controller 250 which in turn drives a fan circuit 214, 216 at the predetermined rate. The resultant flow rate of fluid exiting from the outlet 18 of the intake body 10 and passing the surface portion 26, can be affected due to changes in wind speed or changes to the absolute speed of travel of the sampling device 311. Sensors 211, 212 are therefore used to measure the pressure differential such that the controller 250 can calculate the relative velocity of the fluid exiting from the outlet 18 and passing the surface portion 26 at the collection position 25. The controller 250 can subsequently utilise the calculated relative flow rate in a feedback control, to adjust the fan circuit 214, 216 such that the relative flow rate calculated is maintained at a level which is substantially equivalent to the predetermined input flow rate 310.

### Inlet and Outlet Control

The sampling device can be configured to orient the inlet such that the flow of fluid ingested therethrough is substantially laminar and iso-axial. In embodiments such as in Figures 1 to 10 and 13 to 14, where the device also comprises fluid flow control, the fluid flow through the inlet may also be iso-kinetic. The combination of these flow conditions may advantageously enable the aspiration and improved sampling efficiency for the desired particle size. Aspiration efficiency can be defined as the percentage of particulates in the fluid entering the inlet compared to the percentage of particulates in the atmospheric fluid. Sampling efficiency can be defined as the percentage of particles in the fluid captured onto the surface portion of the sampling device. Laminar flow may occur when there is a stable unidirectional flow of a fluid without any cross-currents. The flow may thus occur in a plurality of parallel layers which may then be represented by airstream lines. In some embodiments it may be advantageous when maximising sampling effectiveness to utilise an inlet that is clear of obstacles (see Figure 2). When the sampling device 100 exhibits laminar fluid flow into the inlet, there may be a reduction in incidents of the particulates contacting an inner wall of the intake body. This may be advantageous when maximising aspiration effectiveness in the sampling device.

During operation of the disclosed sampling device 100, the sampled fluid can pass into the inlet 16 and through the intake body 10 into the sampling device 100. In the illustrated embodiments of Figures 1 to 7 and 13 the intake body takes the form of a nozzle system, however, in some embodiments the intake body can include an orifice. The nozzle includes an elongate intake body extending between a first end and a second end. The inlet 16 is positioned at a first end of the intake body on an inlet portion of the body. The outlet 18 is positioned at a second end of the intake body on an outlet portion of the intake body, the second end being proximal the surface portion 26. The inlet portion of the intake body 11 extends outwardly from the sampling device 100 and can be oriented to facilitate the fluid containing particulates being ingested into the sampling device 100.

In the illustrated embodiment the inlet has a small cross-section. By having a small inlet 16 cross-section in combination with vacuum pressure generated by the exhaust fan 70, the fluid flow can be controlled to have both a uniform particle velocity as well as being substantially laminar.

In some embodiments, such as where the sampling device is exposed to winds, the inlet 16 can be orientated to account for atmospheric conditions such that the fluid flow into the inlet 16 is substantially laminar and iso-axial. In some embodiments, such as when the sampling device 100 is attached to a UAV (see Figure 6A to 6C), the inlet can be controlled to be oriented at any given time during collection to account for pitch and roll of the sampler as it moves such that the fluid flow into the inlet remains substantially laminar.

The nozzle system 10 can be elongate and extend along a longitudinal axis. The surface portion 26 in the collection position 25 also extends along a collection axis. In the illustrated embodiments (Figures 1 to 4 and 13) the outlet body 14 and the outlet 18 extend along a longitudinal axis that is substantially perpendicular to the collection axis along the surface portion 26. When the fluid flowing from the outlet 18 is perpendicular to the surface portion 26, then the fluid flow can be perpendicular to where particles impact on the surface portion. In alternative embodiments, the longitudinal axis of the nozzle system, and thus the fluid flow, can be transverse or at an angle between 0 and 90 degrees relative to the axis of the surface portion.

It is understood that the relationship between the surface portions 26 and the nozzle system (and in particular the outlet body 14 and the outlet 18) can also be varied such that the size and type of particulate that can be most efficiently impacted onto the surface portions 26 is determined (as explained above).

The sampling device 100 can also include a sensor and nozzle control system 203 such as a gyroscope 202 system. For example, the gyroscope 202 can direct the inlet orientation control module 12 to control and adjust the principal axis (i.e. pitch, yaw) of the inlet body 11 in response to measured environmental conditions. The inlet orientation control module 12 can, for example, comprise a rotary wheel 34, a plurality of servo motors 30, 32, a 9-Axis DOF Module (accelerometer, gyroscope, compass), a GPS, a sensor or plurality of sensors for measuring the pressure differential, a temperature sensor, a humidity sensor.

The sampling device 100 can also have an externally mounted particulate and dust sensor that calculates a real-time reading on the particulate matter in the air, thereby providing an indication of the ambient air quality and how the sampling accuracy may be impacted due to dirt and dust ingress into the system during collection. If a certain threshold is breached for a sustained period of time, the particulate and dust sensor can be configured to stop the sampling collection for a period of time.

The sampling device 100 can also have one or more externally mounted sensors 95 that measures the ambient CO₂ and aggregate Volatile Organic Molecules (MoX). These measurements can be correlated to plant stress and disease during analysis of the collected sample.

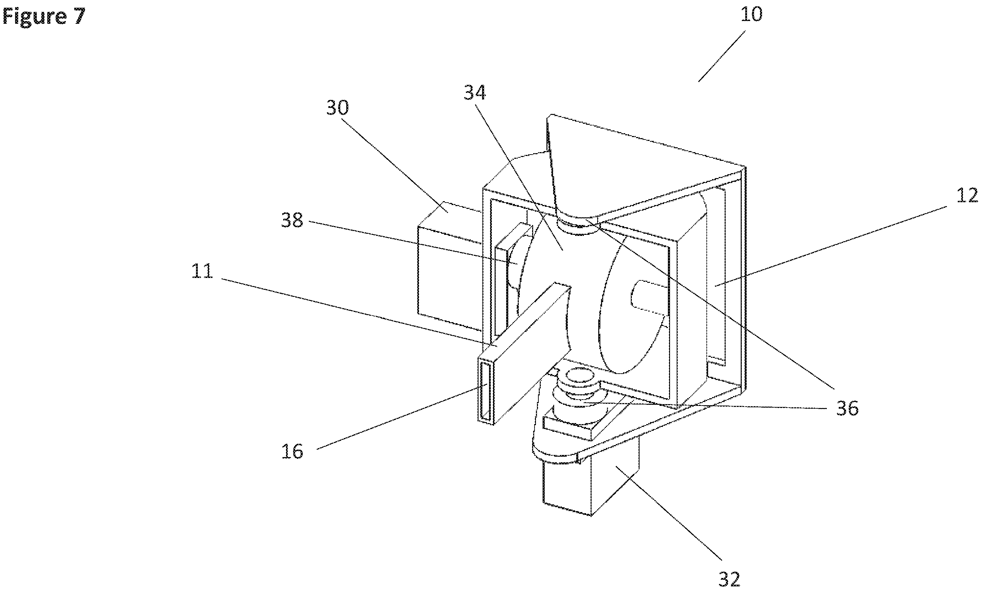

In some embodiments of the inlet orientation control module (see Figure 7), the rotary wheel 34 is mounted on a 2D bracket gimbal 36,38 that can be actuated by 2 servo motors 30,32. The inlet 16 can then be attached to the rotary wheel 34 mid-section via the inlet body 11.

The inlet body 11 can be a flexible connector such as a plastic tube, however, in some embodiments the inlet body 11 can be rigid. It is understood that the length and tubular cross-section of the inlet body 11 can be varied to suit the type of sampling being performed.

In an alternative embodiment (not shown), the inlet body is mounted on a spherical container located at the opening of a funnel, which acts as a socket for the spherical container. The funnel acts as the outlet body and can channel fluid towards the surface portion. The spherical container can be actuated in 3-axis. In some embodiments, the spherical container can be actuated by three servo motors that use rollers to rotate the spherical container, thereby rotating the inlet body and inlet such that it is directed substantially colinearly with the direction of the relative fluid flow around the sampler. This may advantageously enable the fluid flowing into the inlet to be substantially laminar and isokinetic.

Orientation of the inlet 16 by the inlet orientation control module 12 may be advantageous in improving collection efficiency as a direct path can be maintained through which particulates can enter the sampling device 100. This may also advantageously reduce turbulence in the collected fluid flow.

The relative fluid flow includes the relative measurements of the speed and direction of both the sampler and ambient fluid flow (e.g. wind). For example, in a zero-cross-wind W condition or with a fast-moving sampler (Figure 6B) the nozzle system 10 will adjust to face into the direction of travel Z of the sampler 100. In a further example, the wind speed W increases in a direction that is at an angle to the sampler 100 direction Z (Figure 6C), the nozzle system 10 may adjust the angle of its yaw to account for this.

Referring for example to Figure 8B, in some embodiments the pitch, yaw and roll of the sampler can be measured using a gyroscope sensor 202. In some embodiments the direction and speed of motion of the sampling device 100 can be measured by either the onboard compass, the GPS 242 or a combination thereof. In some embodiments, measurements can be passed through the controller unit 250 that can process the measurements and provide feedback to the relevant driving arrangements such as the servo motors 30,32, stepper motors 244, 246 or exhaust fan 214 (e.g. in the flow rate control by controlling the fan, as depicted in Figure 9B).

Figure 9A depicts the linear control where the controller 250 accounts for the wind induced change in the pitch 301 of the sampling device 100, by feeding back a reading of the gyroscope 202, to maintain the sampling device 100 substantially at a desired or pre-set pitch angle 300.

In some embodiments, the speed and direction of the atmospheric fluid flow can be calculated by the controller 250 using a forward-facing pitot-static tube 44 (shown in Figure 1), in combination with pressure sensors 211, 212 and temperature sensors, the compass and the GPS 242. The controller 250 can calculate the fluid density from the pitot-static tubes 40,44 (or anemometer) in combination with the pressure 211, 212 and temperature sensors. Using these calculations, the controller 250 can thereby calculate the true speed of the atmospheric fluid flow. When combined with the reading from the compass and GPS 242, the controller 250 can calculate both the true heading and direction of the atmospheric fluid flow, as well as the ground speed and track direction. The relative speed and direction of the atmospheric fluid flow can then be calculated by the controller 250 by subtracting the true speed vector from the ground speed vector.

In some embodiments, the external pressure and relative velocity sensors (e.g. pitot tube or anemometer 44) can rotate using a servo motor system to account for lateral motion of the sampler measured by the accelerometer/gyroscope 202 circuit.

The pitch and yaw can be adjusted by rotary actuators such as a plurality of servomotors 30, 32 based on feedback from sensors inbuilt on the sampling device 100. More specifically, the pitch can be adjusted in the presently disclosed embodiment based on feedback from the gyroscope 202 and accelerometer. The yaw can be adjusted in the presently disclosed embodiment based on feedback from the controller 250 after calculating relative speed and direction of the atmospheric fluid flow.

Using the calculated relative direction of the atmospheric fluid flow W, the controller 250 can adjust the pitch of the inlet 16, by adjusting the pitch of the inlet body 11 such that the pitch of the inlet body 11 maintains an orientation θ that is parallel to the direction of travel Y of the sampling device 100 (see Figure 6A) . An example of the aforementioned pitch control is shown in Figure 9A, and is discussed later in the specification.

In the embodiment of the inlet orientation control module 12 shown in Figures 6 to 8, the controller 250 controls the orientation of the rotary wheel 34 and inlet 16, by controlling the servo motor 30 which drives the rotary wheel 34 about the Y-axis passing through the horizontal gimbal bearing 38. When the pitch of the sampling device 100 changes in a direction relative to the horizontal, the gyroscope 202 and controller 250 can measure the change relative to θ and provide the change in a feedback (to the controller 210/250) to the servo motor 30, to reorient the inlet 16 to be parallel to the direction of travel Y.

The inlet orientation control also includes yaw control. Using the calculated relative direction of the atmospheric fluid flow, the controller 250 can adjust the yaw of the inlet 16, by adjusting the yaw of the inlet body 11 such that the yaw of the inlet body 11 maintains an orientation α that account for the relative direction of the atmospheric fluid flow W (see Figures 6B and 6C). In the illustrated embodiment, the inlet body 11 is substantially parallel to the relative direction of the atmospheric fluid flow. A linear control paradigm similar to that discussed in relation to Figure 9A for the pitch control, can be applied for the yaw control.

For instance, in the embodiment of the inlet orientation control module 12 shown in Figure 7 and 8A, the controller 250 can orient the rotary wheel 34 and inlet 16 by rotating the servo motor 32 about the Z-axis passing through the vertical gimbal bearings 36. When atmospheric wind conditions W change in direction relative to the axes of the sampling device 100, the controller 250 can measure the relative change utilising the sensors (as above) and provide the feedback (via the controller 210/250) to the servo motor 30 to reorient the inlet 16 substantially parallel to the relative direction of the atmospheric fluid flow W (see Figures 6B and 6C).

### Method of Collection of Particulates using a Sampling Device

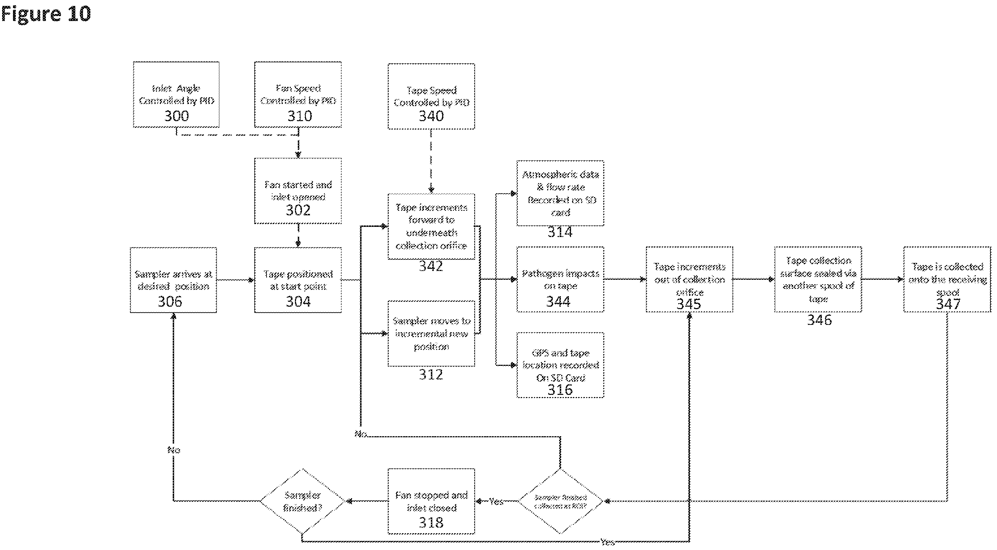

Figure 10 shows an example of a method of collecting particulates using the sampler disclosed herein and associated data. The steps included in the flow diagram may be performed in the order indicated by the arrows. While the flow diagram refers to tape, it is understood that alternative forms of the surface portion are available. Also, the flow diagram refers to pathogens, and as discussed above, it is understood that the sampler may collect many forms of particulates including pathogens.

Further, although now shown in the flow diagram, atmospheric and geospatial data may be collected that is correlated with specific particulates. Some examples of atmospheric data are wind, temperature and humidity. Some examples of geospatial information are time and location. This data may be stored on a removable memory device. This data may be stored in relation to a static device or a mobile device. In relation to a mobile device, storing this data is advantageous as it accurately records information about the collected particulates that assists in developing the infestation maps and threat prediction software of diseased air borne particulates discussed in more detail below.

### Analysis System

The surface portions 26 containing the particulates may be removed from the sampling device for post processing and analysis. In some embodiments, as shown in Figures 2 and 3, the surface portions are continuous on a common surface such as tape which is contained within a removable cassette-like system 50 which may protect the surface portion 26 when it is not inside the sampling device 100 or a device for post processing.

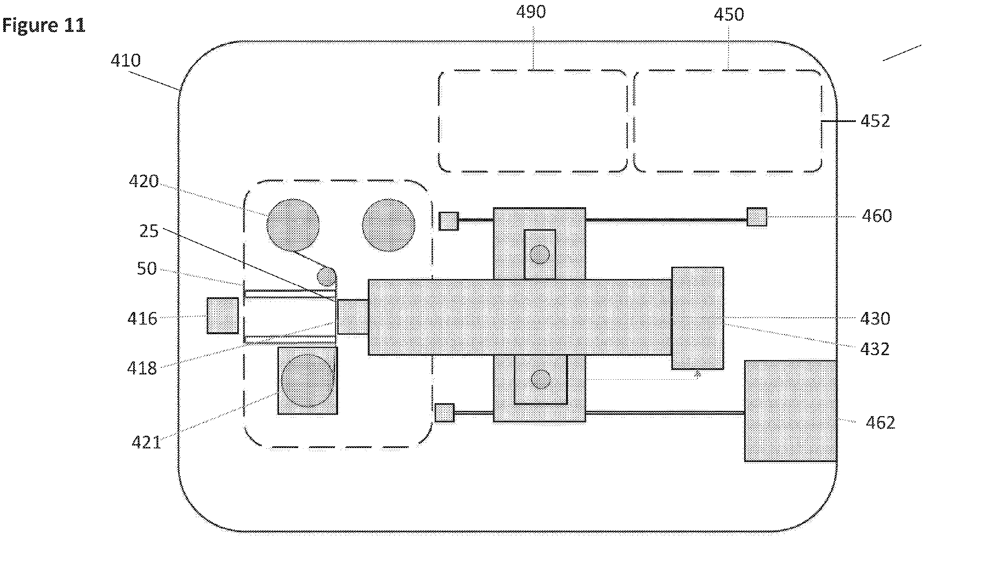

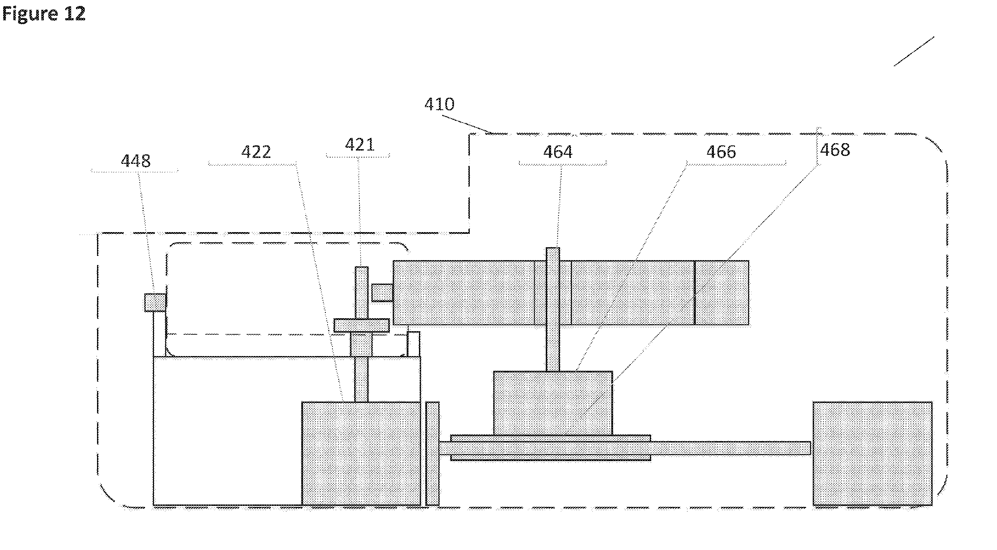

In the embodiment shown in Figures 11 - 12, a collection arrangement analysis system 400 receives the cassette 50 for post processing and analysis of the surface portions 26. The cassette 50 can be secured in collection arrangement analysis system 400 by a holding mechanism 448. In some embodiments of the collection arrangement analysis system 400, the system can scan through contiguous surface portions 26 (such as a tape) that is continuous and can contain continuous data. In some embodiments, the collection arrangement analysis system 400 scans the surface portions that are static, such as microscope slides. In some embodiments, the collection arrangement analysis system can receive both dynamic and static surface portions for analysis.

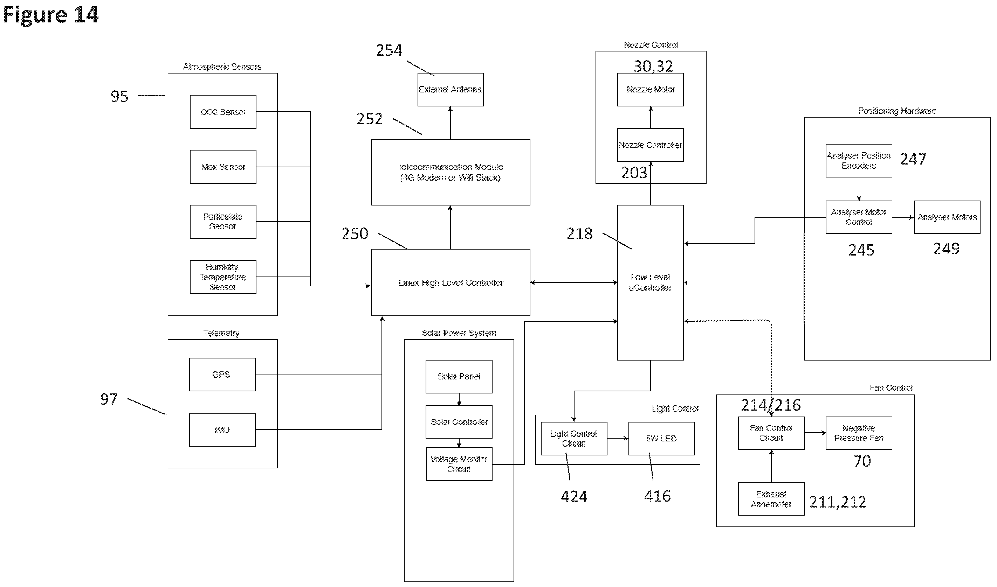

The collection arrangement analysis system 400 can scan through the surface portions (whether it is a moveable tape or a static slide) by shining a backlight 416 (e.g. LED) through the respective surface portion 26 as it passes a microscope optic 418. A light control circuit 424 and the light 416 (see Figure 14) form a light module, which can be subject to system control from the controller(s) 250, 218. The microscope optic tube 430 (on which the microscope optic 418 is mounted) also comprises a microscope camera 432 which may either read in real time or capture images of the surface portions as they move from the supply reel 420 to the collection reel 421. The collection reel 421 is driven by a motor 422 which can be operated a manner similar to the collection reel 21 of the sampling device (see above). Similarly, where a moveable collection arrangement is used, the speed of movement of the surface portions 26 may be controlled to be constant.

The microscope optic tube 430 can be moved within the collection arrangement analysis system 400 housing 410 in both vertical and horizontal directions. This may optimise the optical scanning. The microscope optic tube 430 can rest on a horizontal optic platform 468 and then moved along a vertical optic guide shaft 464 by a vertical optic motor 466 or along a horizontal movement guide 460 by a horizontal positioning motor 462.

In some embodiments, collected images of the surface portions 26 can be analysed using spectroscopy to determine the spectral signature of a material. The collection arrangement analysis system 400 may identify the spectral signature of a collected particulate to identify the composition of the material. The spectral scanning is done by adding a Near Infrared/Visual Spectrum sensor which can be achieved through optical beam splitting (binocular microscope).

In some embodiments, collected images of the surface portions 26 can be analysed by optical detection and analysis methods. Optical detection and analysis methods include use of computer vision and convolutional neural networks (such as optical image recognition) to detect the presence of different particulates on the surface portions 26.

In some embodiments collected images of the surface portions 26 can be analysed by a combination of spectral and optical analysis methods.

A controller 450 controls the collection arrangement analysis system 400 during operation and can send the optical images and spectral scans to a computer or processor 452 that is connected either by wifi, bluetooth, cable or any other connection means for further processing. In some embodiments, the controller 450 may act as a processor and process collected data independently.

The optical images and spectral scans produced by the collection arrangement analysis system 400 can then be processed by the connected computer 454, where intelligent deep learning algorithms to classify and enumerate the collected particulates on the surface portions 26. The algorithms will have been trained using a training data set to detect or identify the various classes or types of particulates. The optical images produced by the analysis system can further be added to the training data set, so that the detection capability may be refined by the deep learning algorithm.

In general, the collection arrangement analysis system 400 can utilise computer vision techniques such as neural networks or other object recognition methods as well as combinations of different methods to identify the collected particulates on the surface 26 portions (e.g., potential disease pathogens).

The surface portion 26 position can further be correlated with collected atmospheric data or geospatial data from the sampling device 100 (stored on a separate removable memory device such as an SD card). This may advantageously allow for 3D geospatial positioning of particulate types and concentrations whilst also providing the relevant local atmospheric data which can then be used for further independent analysis or modelling. This can enable the generation of a database of particulate data, which can be converted by a computer into a high-precision map of the survey region. The output survey map will thus convey the local data (e.g. of particulate types, concentrations, of the local atmospheric data) in accordance with the geographical location where the data is collected.

As mentioned above, the utilisation of a machine learning based approach may act to improve the results obtained over time, thereby improving the accuracy of detection and identification for the particulates, such as pathogens and diseases, by the trained algorithm. The scan data from the optical or spectral sensor can be provided as training data to a machine learning algorithm, enabling the algorithm to refine the detection results as more training data become available.

### Real Time Analysis System

In some embodiments, the sampling device 100 and collection arrangement analysis system 400 can be incorporated into a singular sampling and analysis system 500. The collected particulates, once captured on the surface portions 26 (in essentially the manner described above) can be air-sealed 31 between the surface portions 26 and the cover (e.g., tape) from the covering reel 22. The surface portion 26 to be analysed can then be passed by the backlight 416 where the sample can be read by the microscope optic 418 and/or microscope camera 432. The analysis process is essentially the same as the analysis process described above. Once the sample has been processed, the tape position can be tracked by a tape position encoder 247 before the processed portion of the surface portion 26 can be wound on a collection reel.

During sampling, the sampling and analysis system 500 can be mobile or static, and can comprise any of the above described systems of control of the surface portions, control of fluid intake, and control of inlet and outlet orientation.

As described above, the sampling and analysis system 500 can also gather atmospheric data, power system feedback (solar power, battery level etc.) as well as any operational debugging information in the background whilst sampling is taking place. A high level controller 250 (see Figure 14) controls the primary decision making of the sampling and analysis system 500, including processes such as data handling and telemetry 97 (e.g. global position system or "GPS" data, or inertial measurement unit or "IMU" data). The telemetry information can be provided with the data (e.g. overlaid with the data) captured by the system 500. As shown in Figure 8A, where the device is a mobile device such as an aerial vehicle, the telemetry data such as GPS or IMU data can be input to a flight controller 220 for the aerial vehicle. The flight controller 220 is embodied in the same processing unit as the system controller 250, or alternatively it is separately embodied. In an example, the system controller 250 utilises the telemetry module 97 to acquire a location reference and/or a transmission path, and transmits the acquired particulate or optical/spectral scan data to a remote memory or processing location (e.g., via a telecommunication module 252).

Once the analysis has been completed by the sampling and analysis system 500, the data collected can be stored internally, copied onto a removable memory source, or sent to a server (off-site) further analysis, storage and visualization. In some embodiments, in order to communicate with an off-site server, the system 500 can have the telecommunications system 252 comprising a modem (e.g. 4G/4GX, long range wifi, CAT M1 or LoRA) with an external antenna 254. In some embodiments, the sampling and analysis system 500 can also receive information from an external source (e.g. firmware updates, sampling routes) via the telecommunications system 252.

In general, the features that contribute to the effectiveness of the fluid sampling device are that the direction and speed of the fluid flow.

The disclosed system describes various aspects of an embodiment of the sampling that control the collection parameters such that accurate particulate sampling measurements can be recorded. Collection parameters may include intake fluid velocity, speed of motion of the surface portions and fluid flow conditions. The disclosed embodiment uses a number of variations of a digital based PID (proportional, integral, derivative) controller to control such parameters.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A sampling device for the collection of particulates from a fluid, the device comprising:
an inlet through which the fluid flows into the device;
a moveable collection arrangement configured to move continuously relative to the inlet and positioned such that a surface portion of the collection arrangement is in a collection position for collecting the particulates from the fluid flowing through the inlet;
a drive arrangement; and
a sensor;
wherein
the drive arrangement is configured for moving the surface portion of the collection arrangement that is in the collection position to and from the collection position whilst the surface portion of the collection arrangement continuously collects particulates from the fluid flow,
the surface portions are contiguous on a common surface and the drive arrangement comprises a supply reel and a collection reel and the common surface is wound about the reels and moveable from the supply reel to the collection reel, the drive arrangement being configured to rotate the collection reel such that the surface portions move from the supply reel through the collection position to the collection reel, and
the sensor is positioned between the supply reel and the collection reel and determines the speed of the surface portions, the drive arrangement being operable, in response to the speed of the surface portions determined by the sensor, to adjust the movement of the collection arrangement at a constant velocity.

2. A sampling device according to claim 1, wherein the surface portions when in the collection position, are substantially perpendicular to the flow from an outlet.

3. A sampling device according to claim 1 or 2, further comprising a cover arranged to overlay the surfaces portions between the collection position and the collection reel such that the particulates collected on the surface portions are retained between the cover and the surface portions.

4. A sampling device according to any one of the preceding claims, further comprising a reservoir for storing a biologically supportive substrate, and a dispenser for dispensing the biologically supportive substrate from the reservoir onto the surface portions, the dispenser being positioned such that biologically supportive substrate is dispensed onto the surface portions prior to moving into the collection position.

5. A sampling device according to any one of the preceding claims wherein the device is either a static device or a mobile device that is operative to collect particulates whilst the device is in motion.

6. A method for particulate detection comprising:
positioning a collection surface with respect to at least one of an optical and spectral sensor, the collection surface in the form of a moveable collection arrangement that is configured to move continuously such that a surface portion of the collection arrangement is in a collection position for collecting the particulates from a fluid, the surface portion of the collection arrangement that is in the collection position varying in response to movement of the collection arrangement whilst continuously collecting particulates from the fluid flow, the movement of the collection arrangement having a velocity that is configured such that a constant volume of the fluid passes each of the surface portions in the collection position, the surface portions being contiguous on a common surface;
determining a speed of the surface portions and, in response to the speed of the surface portions, determined by a sensor positioned between the supply reel and the collection reel, adjusting the movement of the collection arrangement such that the surface portions move through the collection position at a constant velocity;
sensing particulates received on the collection surface using the at least one optical or spectral sensor; and
analysing collected data from the at least one sensor using a processor.

7. A method according to claim 6, wherein the moveable collection surface is moved by a drive arrangement, the drive arrangement being defined according to the features of claim 1.

8. A method according to any one of claims 6 or 7, wherein, in the collection position, the surface portion is substantially perpendicular to the at least one optical and spectral sensors.

9. A method according to any one of claims 6 to 8, wherein the processor correlates GPS data with the collected data from a position of the surface portion.

10. A method according to any one of claims 6 to 9, wherein the processor utilises at least one of convolutional neural networks and computer deep learning methods to train a detection algorithm to identify the particulates of the collected data.

11. A method according to claim 10, wherein the detection algorithm includes a computer vision algorithm comprising an object recognition algorithm, a neural network algorithm, or a combination thereof.

## Patentansprüche

1. Probenahmevorrichtung für die Sammlung von Partikeln aus einem Fluid, wobei die Vorrichtung umfasst:
einen Einlass, durch den das Fluid in die Vorrichtung strömt;
eine bewegliche Sammelanordnung, die dafür konfiguriert, sich kontinuierlich relativ zum Einlass zu bewegen und derart positioniert ist, dass sich ein Oberflächenabschnitt der Sammelanordnung in einer Sammelposition zum Sammeln der Partikel aus dem durch den Einlass strömenden Fluid befindet;
eine Antriebsanordnung; und
einen Sensor;
wobei
die Antriebsanordnung dafür konfiguriert ist, den Oberflächenabschnitt der Sammelanordnung, der sich in der Sammelposition befindet, zu und von der Sammelposition zu bewegen, während der Oberflächenabschnitt der Sammelanordnung kontinuierlich Partikel aus dem Fluidstrom sammelt,
die Oberflächenabschnitte auf einer gemeinsamen Oberfläche zusammenhängend sind und die Antriebsanordnung eine Zufuhrspule und eine Sammelspule umfasst und die gemeinsame Oberfläche um die Spulen gewickelt und von der Zufuhrspule zur Sammelspule beweglich ist, wobei die Antriebsanordnung dafür konfiguriert ist, die Sammelspule derart zu drehen, dass sich die Oberflächenabschnitte von der Zufuhrspule durch die Sammelposition zur Sammelspule bewegen, und
der Sensor zwischen der Zufuhrspule und der Sammelspule positioniert ist und die Geschwindigkeit der Oberflächenabschnitte bestimmt, wobei die Antriebsanordnung funktionsfähig ist, um, in Reaktion auf die vom Sensor bestimmte Geschwindigkeit der Oberflächenabschnitte die Bewegung der Sammelanordnung mit einer konstanten Geschwindigkeit anzupassen.

2. Probenahmevorrichtung nach Anspruch 1, wobei die Oberflächenabschnitte, wenn sie sich in der Sammelposition befinden, im Wesentlichen senkrecht zum Strom aus einem Auslass sind.

3. Probenahmevorrichtung nach Anspruch 1 oder 2, weiter umfassend eine Abdeckung, die so angeordnet ist, dass sie die Oberflächenabschnitte zwischen der Sammelposition und der Sammelspule derart überdeckt, dass die auf den Oberflächenabschnitten gesammelten Partikel zwischen der Abdeckung und den Oberflächenabschnitten zurückgehalten werden.

4. Probenahmevorrichtung nach einem der vorstehenden Ansprüche, weiter umfassend ein Reservoir zum Aufbewahren eines biologisch unterstützenden Substrats und einen Spender zum Spenden des biologisch unterstützenden Substrats aus dem Reservoir auf die Oberflächenabschnitte, wobei der Spender derart positioniert ist, dass biologisch unterstützendes Substrat auf die Oberflächenabschnitte gespendet wird, bevor sie sich in die Sammelposition bewegen.

5. Probenahmevorrichtung nach einem der vorstehenden Ansprüche, wobei die Vorrichtung entweder eine stationäre Vorrichtung oder eine mobile Vorrichtung ist, die funktionsfähig ist, um Partikel zu sammeln, während sich die Vorrichtung in Bewegung befindet.

6. Verfahren zur Detektion von Partikeln, umfassend:
Positionieren einer Sammeloberfläche in Bezug auf mindestens eines von einem optischen und einem spektralen Sensor, wobei sich die Sammeloberfläche in der Form einer beweglichen Sammelanordnung befindet, die dafür konfiguriert ist, sich kontinuierlich derart zu bewegen, dass sich ein Oberflächenabschnitt der Sammelanordnung in einer Sammelposition zum Sammeln der Partikel aus einem Fluid befindet, wobei sich der Oberflächenabschnitt der Sammelanordnung, der sich in der Sammelposition befindet, in Reaktion auf die Bewegung der Sammelanordnung ändert, während er kontinuierlich Partikel aus dem Fluidstrom sammelt, wobei die Bewegung der Sammelanordnung eine Geschwindigkeit aufweist, die derart konfiguriert ist, dass ein konstantes Volumen des Fluids jeden der Oberflächenabschnitte in der Sammelposition passiert, wobei die Oberflächenabschnitte auf einer gemeinsamen Oberfläche zusammenhängend sind;
Bestimmen einer Geschwindigkeit der Oberflächenabschnitte und, in Reaktion auf die Geschwindigkeit der Oberflächenabschnitte, die von einem zwischen der Zufuhrspule und der Sammelspule positionierten Sensor bestimmt wird, Anpassen der Bewegung der Sammelanordnung derart, dass sich die Oberflächenabschnitte mit einer konstanten Geschwindigkeit durch die Sammelposition bewegen;
Erfassen von auf der Sammeloberfläche empfangenen Partikeln unter Verwendung mindestens eines optischen oder spektralen Sensors; und
Analysieren der vom mindestens einen Sensor gesammelten Daten unter Verwendung eines Prozessors.

7. Verfahren nach Anspruch 6, wobei die bewegliche Sammeloberfläche durch eine Antriebsanordnung bewegt wird, wobei die Antriebsanordnung gemäß den Merkmalen von Anspruch 1 definiert ist.

8. Verfahren nach einem der Ansprüche 6 oder 7, wobei der Oberflächenabschnitt in der Sammelposition im Wesentlichen senkrecht zum mindestens einen optischen und spektralen Sensor ist.

9. Verfahren nach einem der Ansprüche 6 bis 8, wobei der Prozessor GPS-Daten mit den gesammelten Daten von einer Position des Oberflächenabschnitts korreliert.

10. Verfahren nach einem der Ansprüche 6 bis 9, wobei der Prozessor mindestens eines der konvolutionellen neuronalen Netzwerken und Computer-Deep-Learning-Verfahren nutzt, um einen Detektionsalgorithmus zu trainieren, um die Partikel der gesammelten Daten zu identifizieren.

11. Verfahren nach Anspruch 10, wobei der Detektionsalgorithmus einen Computer-Vision-Algorithmus einschließt, der einen Objekterkennungsalgorithmus, einen neuronalen Netzwerkalgorithmus oder eine Kombination davon umfasst.

## Revendications

1. Dispositif d'échantillonnage pour la collecte de particules dans un fluide, le dispositif comprenant :
une entrée par laquelle le fluide s'écoule dans le dispositif ;
un ensemble de collecte mobile configuré pour se déplacer en continu par rapport à l'entrée et positionné de telle sorte qu'une partie de surface de l'ensemble de collecte se trouve en position de collecte pour collecter les particules du fluide s'écoulant à travers l'entrée ;
un ensemble d'entraînement ; et
un capteur ;
dans lequel
l'ensemble d'entraînement est configuré pour déplacer la partie de surface de l'ensemble de collecte qui se trouve en position de collecte vers et depuis la position de collecte pendant que la partie de surface de l'ensemble de collecte recueille en continu les particules présentes dans l'écoulement de fluide,
les parties de surface sont contiguës sur une surface commune et l'ensemble d'entraînement comprend une bobine d'alimentation et une bobine de collecte, et la surface commune est enroulée autour des bobines et est mobile entre la bobine d'alimentation et la bobine de collecte, l'ensemble d'entraînement étant configuré pour faire tourner la bobine de collecte de sorte que les parties de surface se déplacent de la bobine d'alimentation à la bobine de collecte, en passant par la position de collecte, et
le capteur est positionné entre la bobine d'alimentation et la bobine de collecte et détermine la vitesse des parties de surface, l'ensemble d'entraînement ayant pour fonction, en réponse à la vitesse des parties de surface déterminée par le capteur, d'ajuster le mouvement de l'ensemble de collecte à une vitesse constante.

2. Dispositif d'échantillonnage selon la revendication 1, dans lequel les parties de surface, lorsqu'elles sont en position de collecte, sont sensiblement perpendiculaires à l'écoulement provenant d'une sortie.

3. Dispositif d'échantillonnage selon la revendication 1 ou 2, comprenant en outre un couvercle agencé pour recouvrir les parties de surface entre la position de collecte et la bobine de collecte de sorte que les particules collectées sur les parties de surface sont retenues entre le couvercle et les parties de surface.

4. Dispositif d'échantillonnage selon l'une quelconque des revendications précédentes, comprenant en outre un réservoir destiné à stocker un substrat de soutien biologique et un distributeur destiné à distribuer le substrat de soutien biologique depuis le réservoir sur les parties de surface, le distributeur étant positionné de telle sorte que le substrat de soutien biologique soit distribué sur les parties de surface avant le déplacement en position de collecte.

5. Dispositif d'échantillonnage selon l'une quelconque des revendications précédentes, dans lequel le dispositif est soit un dispositif statique, soit un dispositif mobile fonctionnant pour collecter des particules pendant que le dispositif est en mouvement.

6. Procédé de détection de particules, comprenant :
le positionnement d'une surface de collecte par rapport à au moins un capteur parmi un capteur optique et un capteur spectral, la surface de collecte se présentant sous la forme d'un ensemble de collecte mobile configuré pour se déplacer en continu de sorte qu'une partie de surface de l'ensemble de collecte se trouve en position de collecte pour collecter les particules dans un fluide, la partie de surface de l'ensemble de collecte qui est en position de collecte variant en réponse au mouvement de l'ensemble de collecte tout en collectant en continu des particules dans l'écoulement de fluide, le mouvement de l'ensemble de collecte ayant une vitesse qui est configurée de telle sorte qu'un volume constant de fluide passe devant chacune des parties de surface en position de collecte, les parties de surface étant contiguës sur une surface commune ;
la détermination d'une vitesse des parties de surface et, en réponse à la vitesse des parties de surface, déterminée par un capteur positionné entre la bobine d'alimentation et la bobine de collecte, l'ajustement du mouvement de l'ensemble de collecte de sorte que les parties de surface se déplacent à travers la position de collecte à une vitesse constante ;
la détection des particules reçues sur la surface de collecte à l'aide de l'au moins un capteur optique ou spectral ; et
l'analyse des données collectées à partir de l'au moins un capteur à l'aide d'un processeur.

7. Procédé selon la revendication 6, dans lequel la surface de collecte mobile est déplacée par un ensemble d'entraînement, l'ensemble d'entraînement étant défini selon les caractéristiques de la revendication 1.

8. Procédé selon l'une quelconque des revendications 6 ou 7, dans lequel, en position de collecte, la partie de surface est sensiblement perpendiculaire audit au moins un capteur optique ou spectral.

9. Procédé selon l'une quelconque des revendications 6 à 8, dans lequel le processeur met en corrélation les données GPS avec les données collectées à partir d'une position de la partie de surface.

10. Procédé selon l'une quelconque des revendications 6 à 9, dans lequel le processeur utilise au moins l'un parmi des procédés basés sur des réseaux neuronaux convolutifs et sur l'apprentissage profond par ordinateur pour entraîner un algorithme de détection afin d'identifier les particules à partir des données collectées.

11. Procédé selon la revendication 10, dans lequel l'algorithme de détection inclut un algorithme de vision par ordinateur comprenant un algorithme de reconnaissance d'objets, un algorithme de réseau neuronal ou une combinaison de ceux-ci.
